Europäisches Patentamt

European Patent Office

Office européen des brevets

(19)

(11) **EP 1 174 989 A1**

(12) **EUROPEAN PATENT APPLICATION**

(43) Date of publication:
   **23.01.2002 Bulletin 2002/04**

(51) Int Cl.⁷: **H02K 23/64**, H02K 16/00

(21) Application number: **00113936.9**

(22) Date of filing: **30.06.2000**

| (84) Designated Contracting States:<br>**AT BE CH CY DE DK ES FI FR GB GR IE IT LI LU MC NL PT SE**<br>Designated Extension States:<br>**AL LT LV MK RO SI** | (71) Applicant: **Novelli, Flavio**<br>   **34077 Ronchi dei Legionari Gorizia (IT)**<br><br>(72) Inventor: **Novelli, Flavio**<br>   **34077 Ronchi dei Legionari Gorizia (IT)** |

(54) **Electric machine for D.C. and A.C**

(57)   This is a special type of electrical machine that works both in D.C. and in A.C. The power of the machine is determined by the number of employed toruses. Every torus is wraped with a continuous tape of very thin material with a high magnetic permeability.
The rotor is formed by discs that carry permanent magnets of special shape. The machine works in A.C. with a three-phase rotary field. In D.C. the machine works with a slowly special collector. In every slot there are two coils: one for the D.C. and the other for the A.C. The machine can work such as rotary converter, motor or generator both in D.C. and in A.C. The machine is particularly qualified for the marine electric traction.

SEC. B-B

SEC. A-A

**FIG. 2**

EP 1 174 989 A1

**FIG. 5**

## Description

The machine is composed by one stator, a rotor, a collector, from permanent magnets, discs of support, spin axis, coils of excitation. The stator is formed by more toruses that carry the coils of excitation. The coils are of trapeze shape. The coils are distributed like in an electric motor three phase and generate the rotary magnetic field. The rotor is constructed with discs of antimagnetic material fixed on the spin axis. The discs carry permanent magnets (or electromagnets) and are used also for the starter in A.C. . The collector comes used for the operation in D.C.

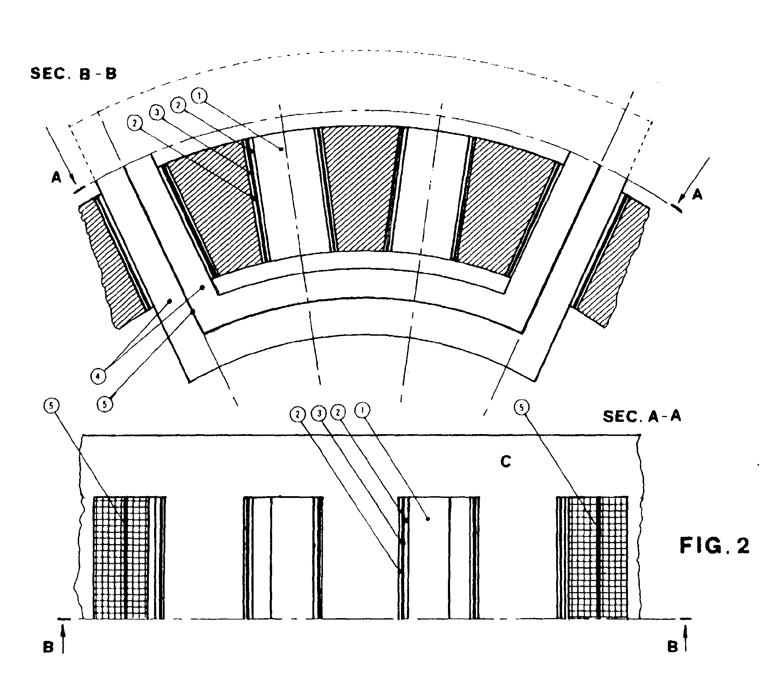

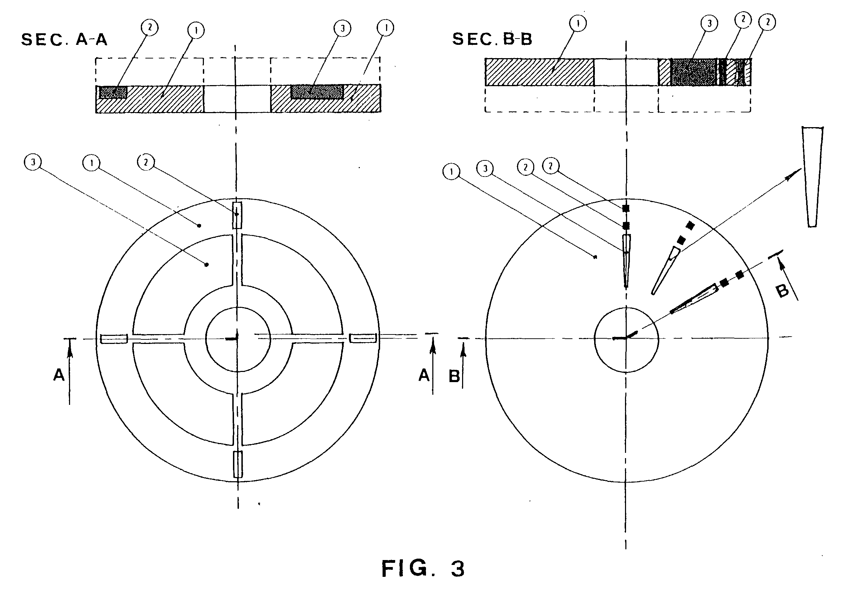

This electric machine is special because it works is both in D.C. and in A.C.. The principles of operation of the electric machines are always the same ones. Between machine and machine the space distribution of the construction elements is various. If we confront the machines currently produced with the proposed model you can see the construction diversity. In particular you can see the diversity for the construction of the toruses of the stator (Fig,1); of the slots which are arranged radially; of the electrodes which are disposed in the slots (Fig.2) ; in the double circuit of the stator coils (Fig.2); in the slowly special collector with the double circuit (Fig.3) ; in the magnets.

The collector is formed plans by circular fields how many are the poles. Every field is amplitude as the magnetic pole. The brushes are put in the point of reversal of the magnetic field. With a separate circuit the brushes for the high voltage become part. The electrodes for high voltage work just in the moment of the reversal of the D.C.

When the machine works in D.C. has characteristics similar to the machine in D.C. brushless. When the machine works in A. C. has characteristics similar to the machine to cross-sectional magnetic flow. Some advantages of the proposed machine are: great flexibility; to start the machine in D.C. and therefore to use it like motor sincronus; is a rotating converter ; the disposition of the coils facilitates the dispersion of the heat; the position of the magnet-coils avoids the vibration of the magnetic poles as instead it happens in the machines to cross-sectional flow when the varied flow from the minimum to the maximum; the electrodes situated in the slots improve the reversal of the current. These electrodes replace the auxiliary poles of the machines in D.C.. The machine, in slow number of revolutions , works for the marine electric traction .

## Electrical performance in D.C.

The machine works with a flat collector; the collector has two series of brushes: the first for the low tension and the second one for high tension. The collector is constructed with circular fields in tungsten. Every circular field is inserted in a support constructed with the quartz. Every circular field has the width of the poles of the machine. The brushes are in tungsten, have a particular shape and are inserted in a support constructed with quartz. The brushes must have an exact position on the circular field: in this way the produced magnetic field from the D.C. acts in sequence with permanent magnets of the rotor. The superficial ones of the collector must be rectified: in this way the friction is reduced , eliminates the air , the flashing and the job tension is increased. At the moment of the reversal of the D.C. in the coils, the brushes to high tension supply an impulse to high voltage to the electrodes mailed in the slots . This impulse electrical worker facilitates the reversal of the current in the coils. The collector can be used like pilot for an electronic system of feeding in D.C.. In this case the cargo current comes absorbed directly from the external electronic system (brushless). When the machine is in sincronismus with the frequency of the A.C. is connected to the alternated tension three phase and the D. C. is detached; after this operation it is possible to use, in parallel , also the coils used for the D.C..

The electro-magnetic total couple is : C = K I inside of is I = current of phase ; K depend on N° couple pole , N° inward way , Φ magnetic flux .

The electric motor is similar to dynamo whit independent excitation .

## Electrical Performance in A. C.

The machine's operation is similar to that of a synchronous machine in that a rotating magnetic field must be produced through the application of sinusoidal currents properly displaced . In the example presented here the rotating magnetic field is three phase but a two phase machine operates in the same way . It should be fairly obvious that the double tore makes it possible to increase the intensity of the rotating magnetic field due to the greater distribution surface for the turns . The speed of rotation of the magnetic field depends on the frequency of the currents circulating in the coils as well as on the number and arrangement of the coils themselves . Therefore , the machine needs an electronic frequency converter during start up in order to synchronize it to the network (or it can be started by means of a collector ). Should it be possible to start the machine at no load or with a limited load, all that is necessary is to start it like an induction machine with subsequent automatic phasing of the rotating field . As stated earlier the machine can operate both with permanent magnets or with electromagnets. From an electrical point of view there is no difference in their performance.

There is however a significant difference in cost, weight and size of the machine . Currently the only magnets available on the marchet have a residual induction equal to 1.1 - 1.2 Tesla which implies higher production costs with respect to electromagnets however the advantage in terms of weight is significant because the magnets are lower density compared to iron and do not require excitation windings on the rotor .

The machine is symmetrical with respect to a plane passing through the support disk on the cage holding the magnets . This symmetry is not indispensable as the machine works perfectly even with just one side however, for greater mechanical equilibrium , a symmetrical form is preferable.

The equations used in the design are those normally used for rotating magnetic fields . In order to calculate the electromagnetic force which is generated between the rotating field and the magnets the following formula is applied :

$$F = [h * d/2 \, \mu_0] * 4 *B_0 * B_m$$

This is the maximum force exerted between a magnet and the rotating field

The terms in the formula have the following significance :

h = length of magnet
d = efficient air gap from magnetic point of view =
=effective air gap + $(1 / M_m) S_m$

where:

$M_m$ = permeability of the magnet
$S_m$ = thickness of the magnet
$\mu_0$ = permeability of the void
$B_0$ = no load induction in the air gap
$B_m$ = induction due to magnet

The formula was tested experimentally and the results were found to be realistic and satisfactory such to justify development of the design .

The internal connection in a three phase machine will be either Y connection or $\Delta$ connection according to construction constraints . The same may be said of the type of winding used in the internal stator .

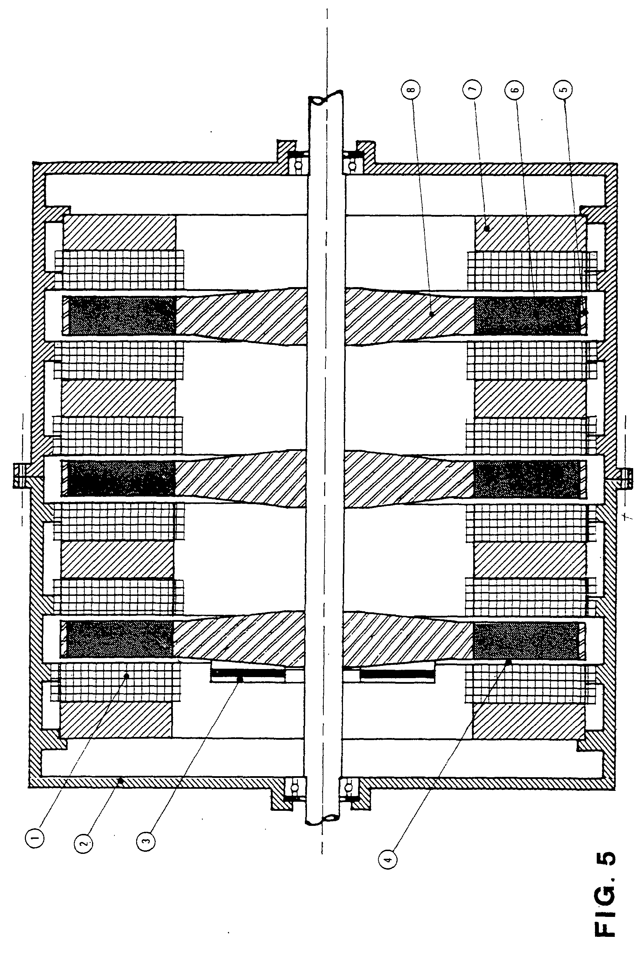

Fig. 5 shows a section of an assembled machine ( rotor + stator). All of the essential parts are visible : stator excitation windings , the frame ( articulated in two symmetrical halves , serves as protection and support ) the magnet support brace , the double air gap ( which serves primarily to actuate the attraction force between the permanent magnet and rotating field In this case the force is double with respect to a traditional machine ) the magnet blocking rings ( which together with the spokes form the squirrel cage ) , the permanent neodymium magnets .

The cooling system has been omitted as it is not fundamental to understanding the machine's operation .

**LEGEND**

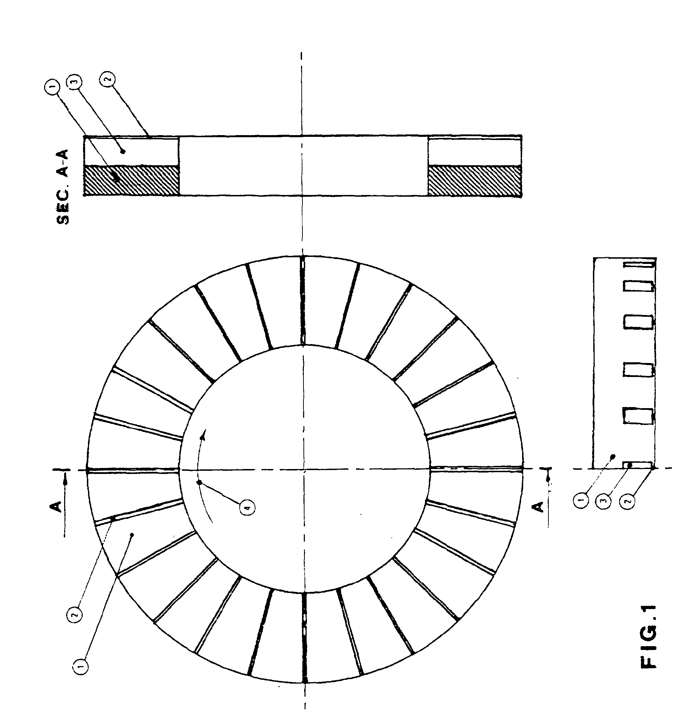

Fig. 1 :   1) Torus
           2) Least slot
           3) Slot
           4) Direction of laminated stator

Fig. 2 :   1) Slot
           2) Insulator
           3) Electrode
           4) Coil for A.C. end C.C.
           5) Insulator

Fig. 3 :   1) Support disk
           2) Sector for high tension
           3) Sector for low tension
           4) Support disk
           5) Brush for low tension
           6) Brush for high tension

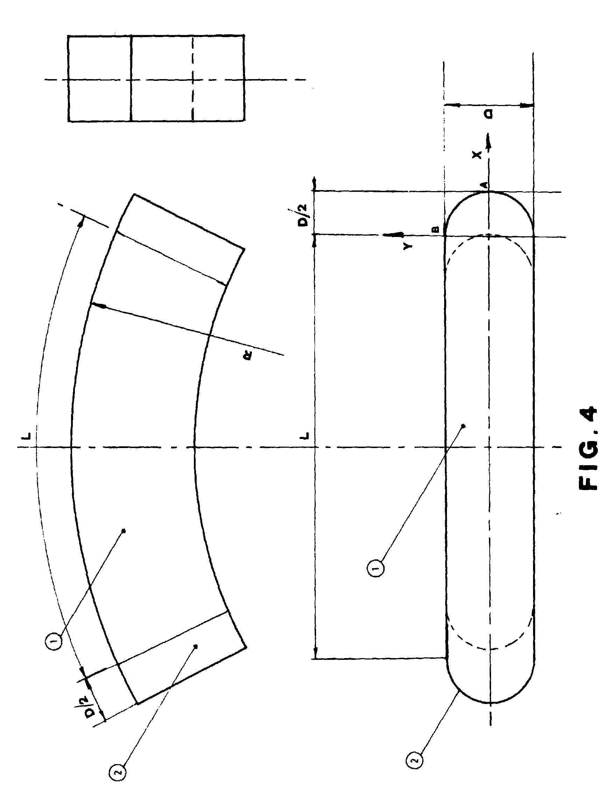

Fig. 4 :   1) Permanent magnet
           2) Dull of permanent magnet

Fig. 5 :   1) Stator winding
           2) Frame
           3) Collector
           4) Air Gap
           5) Magnet support ring
           6) Permanent magnet
           7) Tape stator pack
           8) Magnet support disk

**Claims**

1. Electric machine in which the stator is formed with a multiple number of toruses. Every torus is constructed with a continuous tape much thin one of material to very high magnetic permeability end spin axis parallel . The tape forms a torus in which the slots are gained .The slots are radial , as from fig. 1.

2. Electric machine such as point 1 and characterized from slots which have electrically to their inside of the coverings in material isolated conductor, like from fig. 2.

3. Electric machine such as to points 1 and 2 and that it possesses not less than two independent equal circuits for every quarry: a circuit comes used for the C.C. and the other for the C.A..These circuits are isolated between them from isolated material like from fig. 2 .

4. Electric machine like to points 1.2.3, and that it has an external circuit in order to connect between them , when it is necessary, the two independent circuits.

5. Electric machine such as to points 1.2.3.4 and that is characterized from a slowly special collector like from fig. 3 . This collector is constructed in tungsten for the brushes and the circular sectors ; in quartz for the supports .

6. Electric machine like to points 1.2.3.4.5 and characterized from permanent of particular shape, arranged like circular fields in support discs, constructed magnets with antimagnetic steel like from fig.4 .
   Equation of magnet profile A $\leftrightarrow$ B D/2 = $( x^2 + y^2 )^{1/2}$
   L = $( 2 \pi R / N_p )$ - D - K ; $N_p$ = N° of poles ; K = thickness spoke .

7. Electric machine such as points 1.2.3.4.5.6 and in which the construction materials, even sintering , will be optimized at the moment of the construction.

8. Electric machine meeting all of the above claims and matching the description and illustration presented herewith and for the uses specified.

FIG.1

SEC. B-B

SEC. A-A

FIG. 2

EP 1 174 989 A1

SEC. B-B

SEC. A-A

FIG. 3

FIG. 4

FIG. 5

EP 1 174 989 A1

**European Patent Office**

## PARTIAL EUROPEAN SEARCH REPORT

Application Number

which under Rule 45 of the European Patent Convention shall be considered, for the purposes of subsequent proceedings, as the European search report

EP 00 11 3936

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 94 22204 A (SKYBYK DYMTRO) 29 September 1994 (1994-09-29) * page 13, line 21 - line 22 * * figures 2,5B,7,11,24 * * page 14, line 4 - line 6 * | 1,2,7,8 | H02K23/64 H02K16/00 |
| A | US 5 102 306 A (LIU KUO-SHENG) 7 April 1992 (1992-04-07) * column 2, line 30 - line 43 * | 3,4 | |

TECHNICAL FIELDS SEARCHED (Int.Cl.7)

H02K

### INCOMPLETE SEARCH

The Search Division considers that the present application, or one or more of its claims, does/do not comply with the EPC to such an extent that a meaningful search into the state of the art cannot be carried out, or can only be carried out partially, for these claims.

Claims searched completely :

1 2 3 4 7 8

Claims searched incompletely :

Claims not searched :

5 6

Reason for the limitation of the search:

The search division was not able to understand the claimed subject matter of claims 5 and 6.

| Place of search | Date of completion of the search | Examiner |
|---|---|---|
| BERLIN | 4 December 2000 | Foussier, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C07)

## ANNEX TO THE EUROPEAN SEARCH REPORT
## ON EUROPEAN PATENT APPLICATION NO.

EP 00 11 3936

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2000

| Patent document cited in search report | | Publication date | Patent family member(s) | | Publication date |
|---|---|---|---|---|---|
| WO 9422204 | A | 29-09-1994 | US | 5334899 A | 02-08-1994 |
| US 5102306 | A | 07-04-1992 | NONE | | |

EPO FORM P0459

For more details about this annex : see Official Journal of the European Patent Office, No. 12/82